# EUROPEAN PATENT APPLICATION

(11) **EP 4 415 415 A1**
(43) Date of publication of application: **14.08.2024**
(21) Application number: 22894643.0
(22) Date of filing: 03.11.2022
(51) Int. Cl.: H04W 24/08

(54) **METHOD FOR REDUCING POWER CONSUMPTION, AND ELECTRONIC DEVICE**

(30) Priority: 16.11.2021 CN 202111357066
(71) Applicant: Huawei Technologies Co., Ltd., Shenzhen, Guangdong 518129 (CN)
(72) Inventor: LI, Tongxin, Shenzhen, Guangdong 518129 (CN); TONG, Xiao, Shenzhen, Guangdong 518129 (CN); SHI, Shuai, Shenzhen, Guangdong 518129 (CN); GUO, Haoping, Shenzhen, Guangdong 518129 (CN); FU, Yachen, Shenzhen, Guangdong 518129 (CN)
(74) Representative: Isarpatent
(86) International application number: PCT/CN2022/129630
(87) International publication number: WO 2023/088106

(57) **Abstract**

Embodiments of this application provide a power consumption reduction method and an electronic device. The method may be applied to the electronic device. The method includes: The electronic device detects a first quantity of junk data packets received within first duration. When determining that the first quantity meets a first relationship, the electronic device disconnects a network connection to a network device, and sends a first network connection request to the network device. The electronic device receives a first paging message sent by the network device in response to the first network connection request. The electronic device re-establishes a network connection to the network device based on the first paging message. The technical solutions help reduce power consumption of the electronic device.

## Description

This application claims priority to Chinese Patent Application No. 202111357066.2, filed with the China National Intellectual Property Administration on November 16, 2021 and entitled "POWER CONSUMPTION REDUCTION METHOD AND ELECTRONIC DEVICE", which is incorporated herein by reference in its entirety.

### TECHNICAL FIELD

This application relates to the field of electronic technologies, and more specifically, to a power consumption reduction method and an electronic device.

### BACKGROUND

In a process of interaction between an electronic device and a network device, the network device may allocate an internet protocol (internet protocol, IP) address to the electronic device, and perform normal data exchange with the electronic device by using the IP address.

However, in some cases, the network device may send some junk data packets to the electronic device, and after receiving the junk data packets, the electronic device processes the junk data packets. This additionally increases power consumption of the electronic device.

### SUMMARY

Embodiments of this application provide a power consumption reduction method and an electronic device, to reduce power consumption of the electronic device.

According to a first aspect, a power consumption reduction method is provided, where the method may be applied to an electronic device, and the method includes: the electronic device detects a first quantity of junk data packets received within first duration; when determining that the first quantity meets a first relationship, the electronic device disconnects a network connection to a network device, and sends a first network connection request to the network device; the electronic device receives a first paging message sent by the network device in response to the first network connection request; and the electronic device re-establishes a network connection to the network device based on the first paging message.

In an embodiment of this application, the electronic device may detect a quantity of junk data packets received within the first duration. When the quantity meets the first relationship, the electronic device may disconnect the connection to the network device, send a network connection request to the network device, and re-establish a network connection to the network device based on a paging message sent by the network device.

In this way, when the electronic device re-establishes the network connection to the network device, the network device allocates a new IP address to the electronic device. Therefore, when the network device sends a junk data packet to the original IP address, the electronic device cannot receive the junk data packet. This can reduce power consumption of the electronic device.

With reference to the first aspect, in some implementations of the first aspect, that the electronic device determines that the first quantity meets a first relationship includes: when the first quantity is greater than a first preset value, the electronic device determines that the first quantity meets the first relationship.

In an embodiment of this application, when the first quantity is greater than the first preset value, it means that the electronic device receives a large quantity of junk data packets within the first duration. In this case, it may be determined that the first quantity meets the first relationship, so that the electronic device may perform re-registration to reduce power consumption.

With reference to the first aspect, in some implementations of the first aspect, that the electronic device determines that the first quantity meets a first relationship includes: when a ratio of the first quantity to a total quantity of data packets received by the electronic device within the first duration is greater than a second preset value, the electronic device determines that the first quantity meets the first relationship.

In an embodiment of this application, when the ratio of the first quantity to the total quantity of data packets received by the electronic device within the first duration is greater than the second preset value, it means that the electronic device receives a large quantity of junk data packets within the first duration, so that the electronic device may perform re-registration to reduce power consumption.

Optionally, in some other embodiments, whether to perform the re-registration may also be determined by determining a relationship between a first speed at which the electronic device receives the junk data packet within the first duration and a preset speed. For example, when the first speed is greater than the preset speed, the electronic device disconnects the connection to the network device, and sends the network connection request to the network device.

With reference to the first aspect, in some implementations of the first aspect, after the network connection to the network device is re-established, an internet protocol IP address used by the electronic device to communicate with the network device is different from an IP address used by the electronic device to communicate with the network device before re-establishing the network connection to the network device.

In an embodiment of this application, after the electronic device re-establishes the network connection to the network device, the network device allocates a new IP address to the electronic device. Therefore, when the network device continues to send a junk data packet to an old IP address, the electronic device cannot receive the junk data packet. This reduces a quantity of junk data packets received by the electronic device. In other words, this reduces power consumption of the electronic device.

With reference to the first aspect, in some implementations of the first aspect, the method further includes: when the electronic device determines that the first quantity does not meet the first relationship, the electronic device continues to detect a second quantity of junk data packets received by the electronic device within the first duration; and when determining that the second quantity is greater than the first preset value, the electronic device disconnects the network connection to the network device, and sends a network connection request to the network device.

In this way, when the quantity of junk data packets received within the first duration does not meet the first relationship, the electronic device may continue to detect the second quantity of junk data packets received within next first duration. When the second quantity is greater than the preset value, the electronic device may perform the re-registration, that is, disconnect the network connection to the network device, and send the new network connection request to the network device, to re-establish a network connection to the network device. This helps reduce power consumption of the electronic device.

According to a second aspect, a power consumption reduction method is provided, where the method is applied to an electronic device, and the method includes the following steps.

The electronic device sends a third network connection request to a network device; the electronic device receives a second paging message sent by the network device in response to the third network connection request; the electronic device parses the second paging message, and when determining that the second paging message is a preset paging message, the electronic device determines whether the electronic device is in a preset state; and when determining that the electronic device is in the preset state, the electronic device ignores the second paging message.

In this way, before the electronic device establishes a network connection to the network device, the electronic device may parse the received paging message, and when determining that the paging message is the preset paging message, determine whether the electronic device is in the preset state. When the electronic device is in the preset state, the paging message may be ignored, so that the electronic device does not establish the network connection to the network device, and the electronic device cannot receive a junk data packet from the network device. This can reduce power consumption of the electronic device.

With reference to the second aspect, in some implementations of the second aspect, the second paging message is a packet switching PS paging message.

Optionally, the second paging message is a 5G paging message, a paging message in a future network, or the like.

With reference to the second aspect, in some implementations of the second aspect, the preset state includes one of the following states: a data service switch off state of the electronic device; a voice over long term evolution VOLTE switch off state of the electronic device; a do-not-disturb switch on state of the electronic device; and an enterprise Wi-Fi connected state of the electronic device.

In an embodiment of this application, when the electronic device is in the foregoing preset state, the paging message sent by the network device may be ignored, so that the network connection is not established to the network device. This reduces power consumption of the electronic device.

With reference to the second aspect, in some implementations of the second aspect, the method further includes: when determining that the second paging message is not the preset paging message, the electronic device establishes a network connection to the network device based on the second paging message.

In an embodiment of this application, when determining that the second paging message is not the preset paging message, the electronic device may establish the network connection to the network device, so that normal communication between the electronic device and the network device can be not affected.

With reference to the second aspect, in some implementations of the second aspect, the method further includes: when determining that the second paging message is the preset paging message and the electronic device is not in the preset state, the electronic device establishes a network connection to the network device based on the second paging message.

In an embodiment of this application, when the second paging message is the preset paging message, but the electronic device is not in the foregoing preset state, the electronic device may establish the network connection to the network device, so that normal communication between the electronic device and the network device can be not affected.

According to a third aspect, an electronic device is provided, including one or more processors and one or more memories, where the one or more memories store one or more computer programs, the one or more computer programs include instructions, and when the instructions are executed by the one or more processors, the power consumption reduction method according to any one of the first aspect and the possible implementations of the first aspect is performed.

According to a fourth aspect, an electronic device is provided, including one or more processors and one or more memories, where the one or more memories store one or more computer programs, the one or more computer programs include instructions, and when the instructions are executed by the one or more processors, the power consumption reduction method according to any one of the second aspect and the possible implementations of the second aspect is performed.

According to a fifth aspect, a chip is provided. The chip includes a processor and a communication interface, the communication interface is configured to: receive a signal, and transmit the signal to the processor, and the processor processes the signal, so that the power consumption reduction method according to any one of the first aspect and the possible implementations of the first aspect is performed.

According to a sixth aspect, a chip is provided. The chip includes a processor and a communication interface, the communication interface is configured to: receive a signal, and transmit the signal to the processor, and the processor processes the signal, so that the power consumption reduction method according to any one of the second aspect and the possible implementations of the second aspect is performed.

According to a seventh aspect, a computer-readable storage medium is provided. The computer-readable storage medium stores computer instructions; and when the computer instructions are run on a computer, the power consumption reduction method according to any one of the first aspect and the possible implementations of the first aspect is performed.

According to an eighth aspect, a computer-readable storage medium is provided. The computer-readable storage medium stores computer instructions; and when the computer instructions are run on a computer, the power consumption reduction method according to any one of the second aspect and the possible implementations of the second aspect is performed.

According to a ninth aspect, a computer program product is provided, including computer instructions; and when the computer instructions are run on a computer, the power consumption reduction method according to any one of the first aspect and the possible implementations of the first aspect is performed.

According to a tenth aspect, a computer program product is provided, including computer instructions; and when the computer instructions are run on a computer, the power consumption reduction method according to any one of the second aspect and the possible implementations of the second aspect is performed.

### BRIEF DESCRIPTION OF DRAWINGS

FIG. 1 is a schematic diagram of a structure of an electronic device according to an embodiment of this application;
FIG. 2 is a schematic diagram of a software structure of an electronic device according to an embodiment of this application;
FIG. 3 is a schematic diagram of an interaction process between an electronic device and a network device according to an embodiment of this application;
FIG. 4 is a schematic diagram of data packet processing inside an electronic device according to an embodiment of this application;
FIG. 5 is a schematic flowchart of a power consumption reduction method according to an embodiment of this application;
FIG. 6 is a schematic flowchart of another power consumption reduction method according to an embodiment of this application;
FIG. 7 is a schematic flowchart of a power consumption reduction method according to an embodiment of this application; and
FIG. 8 is a schematic flowchart of another power consumption reduction method according to an embodiment of this application.

### DESCRIPTION OF EMBODIMENTS

The following describes technical solutions in embodiments of this application with reference to the accompanying drawings.

An electronic device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The electronic device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5th-generation (5th-generation, 5G) communication network, a terminal device in a future evolved public land mobile network (public land mobile network, PLMN), or the like. This is not limited in embodiments of this application.

The network device in embodiments of this application may be a device configured to communicate with an electronic device. The network device may be a base transceiver station (base transceiver station, BTS) in a global system of mobile communication (global system of mobile communication, GSM) or code division multiple access (code division multiple access, CDMA), may be a NodeB (nodeB, NB) in a wideband code division multiple access (wideband code division multiple access, WCDMA) system, may be an evolved NodeB (evolved nodeB, eNB, or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a 5G network, a network device in a future evolved PLMN network, or the like. This is not limited in embodiments of this application.

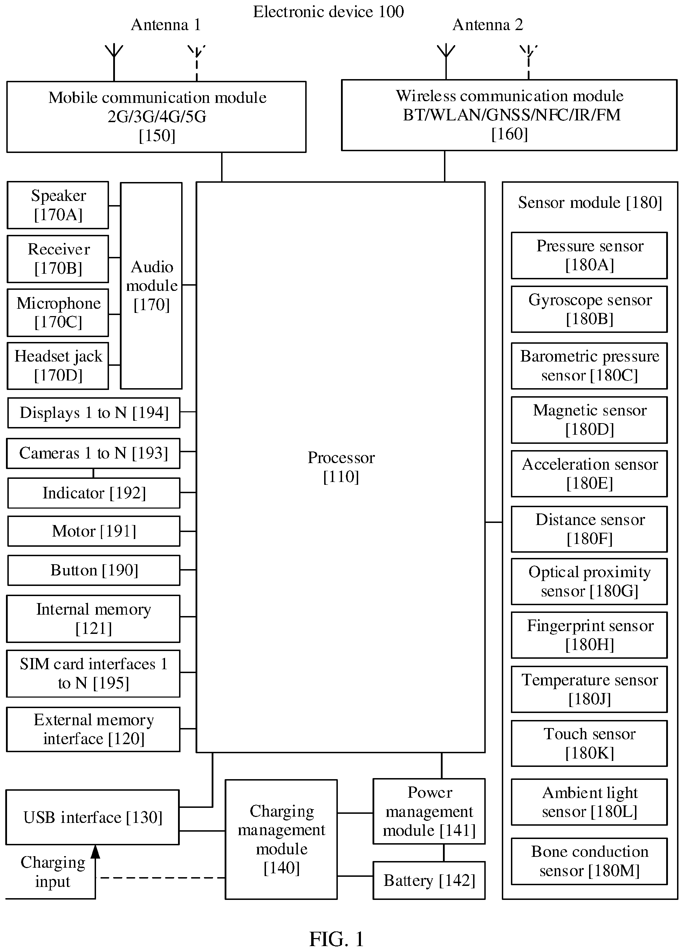

FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure illustrated in this embodiment of this application constitutes no specific limitation on the electronic device 100. In some other embodiments of this application, the electronic device 100 may include more or fewer components than those shown in the figure, have some components combined, have some components split, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL).

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be configured to perform audio communication, and sample, quantize, and code an analog signal. In some embodiments, the audio module 170 may be coupled to the wireless communication module 160 through a PCM bus interface.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160.

The MIPI interface may be configured to connect the processor 110 to a peripheral device such as the display 194 or the camera 193.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like.

The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device.

It may be understood that an interface connection relationship between the modules illustrated in this embodiment of this application is merely an example for description, and does not constitute a limitation on a structure of the electronic device 100. In some other embodiments of this application, the electronic device 100 may alternatively use an interface connection manner different from an interface connection manner in the foregoing embodiment, or use a combination of a plurality of interface connection manners.

The charging management module 140 is configured to receive a charging input from the charger. The charger may be a wireless charger or a wired charger. In some embodiments in which wired charging is used, the charging management module 140 may receive a charging input from the wired charger through the USB interface 130. In some embodiments in which wireless charging is used, the charging management module 140 may receive a wireless charging input through a wireless charging coil of the electronic device 100. The charging management module 140 may further supply power to the electronic device by using the power management module 141 when the charging management module 140 charges the battery 142.

The power management module 141 is configured to connect to the battery 142, the charging management module 140, and the processor 110.

A wireless communication function of the electronic device 100 may be implemented by using the antenna 1, the antenna 2, the mobile communication module 150, the wireless communication module 160, the modem processor, the baseband processor, and the like.

The mobile communication module 150 may provide a solution applied to the electronic device 100 for wireless communication including 2G/3G/4G/5G, and the like.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), or may be a display panel made of one of materials such as an organic light-emitting diode (organic light-emitting diode, OLED), an active matrix organic light-emitting diode or an active matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the electronic device 100 may include one or N displays 194, where N is a positive integer greater than one.

The electronic device 100 may implement a photographing function through the ISP, the camera 193, the video codec, the GPU, the display 194, the application processor, and the like.

The ISP is configured to process data fed back by the camera 193. The camera 193 is configured to capture a static image or a video.

The digital signal processor is configured to process a digital signal, and may process another digital signal in addition to a digital image signal.

The video codec is configured to compress or decompress a digital video. The electronic device 100 may support one or more types of video codecs.

The external memory interface 120 may be configured to connect to an external memory card, for example, a micro SD card, to extend a storage capability of the electronic device 100.

The internal memory 121 may be configured to store computer-executable program code, where the executable program code includes instructions. The processor 110 runs the instructions stored in the internal memory 121, to perform various functional applications of the electronic device 100 and data processing.

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal and may convert the pressure signal into an electrical signal. In some embodiments, the pressure sensor 180A may be disposed on the display 194.

The gyroscope sensor 180B may be configured to determine a motion posture of the electronic device 100.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The acceleration sensor 180E may detect accelerations in various directions (usually on three axes) of the electronic device 100.

The distance sensor 180F is configured to measure a distance.

The fingerprint sensor 180H is configured to collect a fingerprint.

The touch sensor 180K is also referred to as a "touch panel". The touch sensor 180K may be disposed on the display 194. The touch sensor 180K and the display 194 form a touchscreen that is also referred to as a "touch screen".

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal.

The button 190 includes a power button, a volume button, and the like.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

A software system of the electronic device 100 may use a layered architecture, an event-driven architecture, a microkernel architecture, a microservice architecture, or a cloud architecture. In an embodiment of this application, an Android system of a layered architecture is used as an example to illustrate a software structure of the electronic device 100.

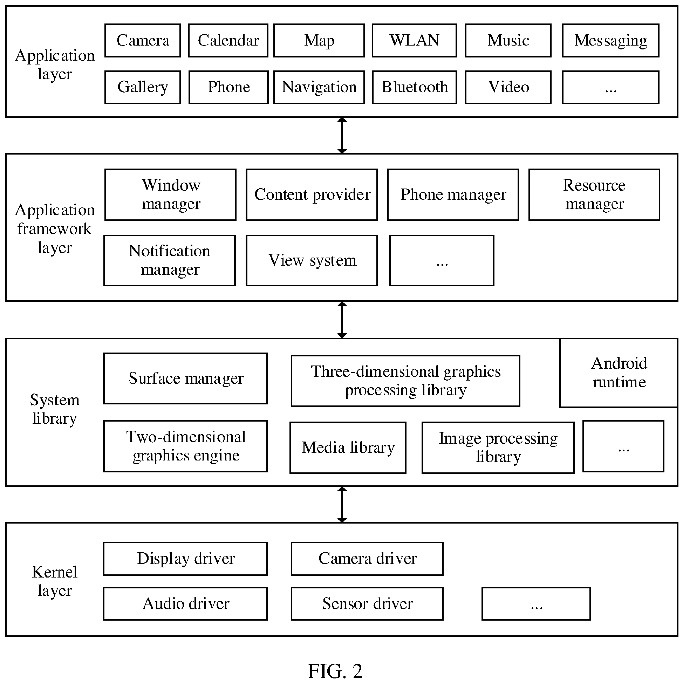

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and a system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including a short message service message notification icon may include a view for displaying text and a view for displaying a picture.

The phone manager is configured to provide a communication function for the electronic device 100. For example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively provide a notification, in a top status bar of the system, in a form of a graph or a scroll bar text, for example, a notification of an application running in the background or a notification that appears on a screen in a form of a dialog window. For example, text information is prompted in the status bar, an alert sound is played, the electronic device vibrates, or the indicator light blinks.

The Android runtime includes a kernel library and a virtual machine. The Android runtime is responsible for scheduling and management of the Android system.

The kernel library includes two parts: a function that needs to be invoked in a Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and abnormality management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before the technical solutions of the method for reducing power consumption of an electronic device in embodiments of this application are described, some terms in this application are first briefly described.

Junk data packet: A type of a data packet received by the electronic device is consistent with a type of data included in a preset processing rule table; a type of a data packet received by the electronic device is consistent with a type of data included in a transmission control protocol (transmission control protocol, TCP) or an internet protocol (internet protocol, IP) protocol stack; or a type of a data packet received by the electronic device is consistent with a type of user-defined processable data in the electronic device.

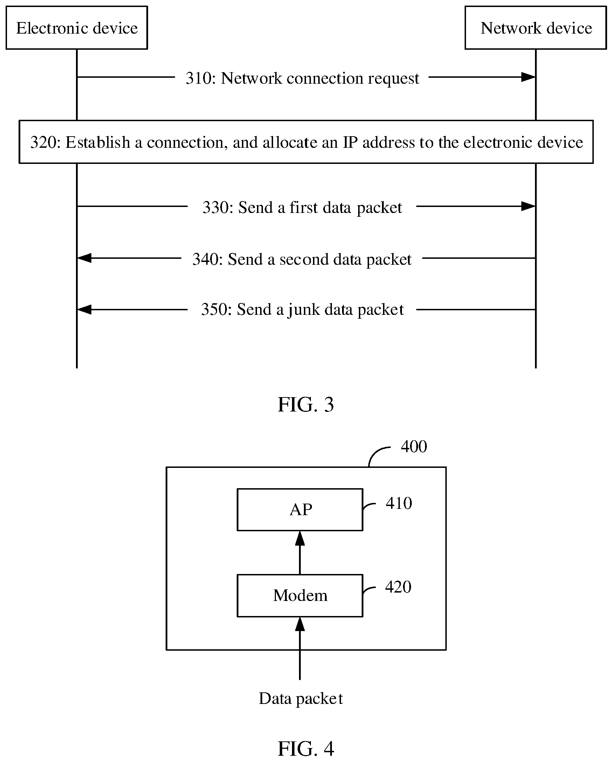

FIG. 3 is a schematic diagram of an interaction process between an electronic device and a network device according to an embodiment of this application. As shown in FIG. 3, the interaction process may include step 310 to step 350.

310: The electronic device sends a network connection request to the network device.

For example, in response to an operation of turning on a data switch by a user, the electronic device sends the network connection request to the network device.

320: After receiving the network request, the network device establishes a network connection to the electronic device, and allocates an IP address to the electronic device.

It should be understood that in this step, after receiving the network request of the electronic device, the network device may send a paging message to the electronic device. After receiving the paging message, the electronic device establishes the network connection to the network device, so that the electronic device can normally use a network. After the electronic device establishes the network connection to the network device, the network device may allocate the IP address to the electronic device, where the IP address is an identifier of the electronic device, and the network device may perform network data packet exchange with the electronic device by using the IP address.

330: The electronic device sends a first data packet to the network device.

For example, the first data packet is used to request some data.

340: After receiving the first data packet sent by the electronic device, the network device sends a second data packet to the electronic device.

For example, after receiving the first data packet sent by the electronic device, the network device sends, to the electronic device, the data requested by the electronic device.

350: The network device sends a junk data packet to the electronic device.

In some cases, in addition to sending a normal data packet to the electronic device, the network device may further send some junk data packets. After receiving the junk data packet, the electronic device processes the junk data packet. This increases power consumption of the electronic device.

Currently, the electronic device usually uses a communication mode based on an application processor (application processor, AP) and a modem (modem). When the electronic device performs data exchange with the network device, a modem in the electronic device demodulates a data packet transmitted by the network device to the electronic device and sends the demodulated data packet to an AP. After processing the data packet, the AP sends, to the modem, a signal that needs to be sent. The modem modulates the signal and sends the modulated signal to a radio frequency transceiver, an antenna, and the like, to send the signal to the network device.

FIG. 4 is a schematic diagram of data packet processing inside an electronic device according to an embodiment of this application. As shown in FIG. 4, the electronic device 400 may include at least an application processor AP 410 and a modem 420.

In a process of communication between the electronic device 400 and a network device, the modem 420 demodulates a data packet from the network device and sends the demodulated data packet to the AP 410. After processing the data packet, the AP 410 transmits, to the modem 420, data that needs to be sent.

A transport layer of a transmission control protocol (transmission control protocol, TCP) stack of the AP 410 or a transport layer of an IP protocol stack of the AP 410 includes a port number of a program run on the electronic device 400 and an IP address of the electronic device. For the electronic device that accesses a network, the IP address is an identifier of the electronic device 400, and the network device may perform data interaction with the electronic device 400 by using the IP address.

Refer to FIG. 4. In a process in which the electronic device 400 performs data interaction with the network device, both the modem 420 and the AP 410 need to operate. In some cases, the electronic device 400 may continuously receive junk data packets from the network device. In this case, the modem 420 and the AP 410 need to continuously process the junk data packets. This increases power consumption of the electronic device 400.

To reduce power consumption of the electronic device, a data processing rule table may be preset in the modem. When a type of a data packet received by the modem is consistent with a data type included in the data processing rule table, or a type of a data packet received by the modem is consistent with a preset data type specified in the TCP/IP protocol stack protocol, the modem processes the data packet, and does not need to send the data packet to the AP. This can reduce power consumption of the AP and further reduce power consumption of the electronic device.

In the foregoing technical solutions, power consumption of the AP is reduced, but the modem still needs to operate continuously. Consequently, power consumption of the electronic device is large.

In view of this, an embodiment of this application provides a power consumption reduction method, and the technical solutions can reduce power consumption of an electronic device.

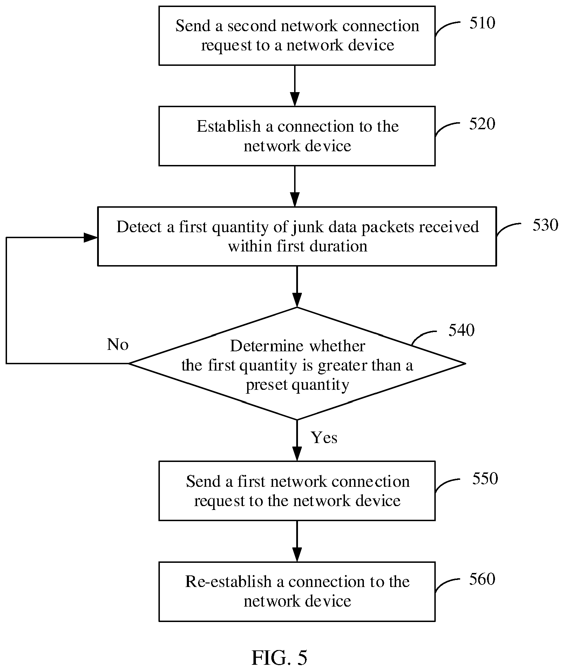

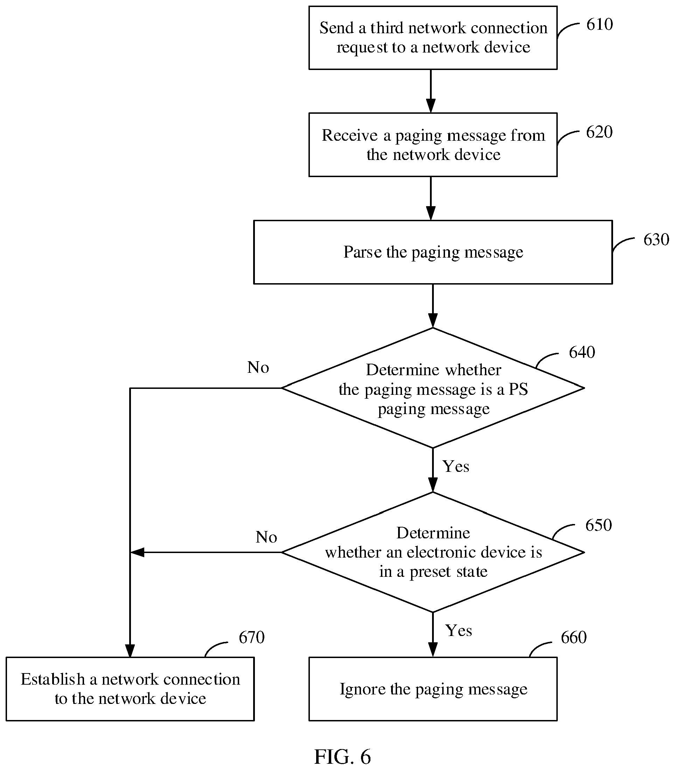

The following describes in detail the power consumption reduction method in embodiments of this application with reference to FIG. 5 and FIG. 6.

FIG. 5 is a schematic flowchart of a power consumption reduction method according to an embodiment of this application. As shown in FIG. 5, the method may be applied to an electronic device, and the method may include step 510 to step 560.

510: The electronic device sends a second network connection request to a network device.

The second network connection request is used to request to connect the electronic device to a network.

In an example, the electronic device is in a power-off state, and in response to a power-on operation by a user, the electronic device sends the second network connection request to the network device.

In another example, in response to an operation of turning on a data switch by a user, the electronic device sends the second network connection request to the network device.

In another example, if the electronic device is in a state of starting an application, for example, HUAWEI Video, in response to an operation of tapping a video by a user, the electronic device sends the second network connection request to the network device.

520: The electronic device establishes a network connection to the network device.

After receiving the second network connection request, the network device may send a paging message to the electronic device. After receiving the paging message sent by the network device, the electronic device establishes the network connection to the network device.

After establishing the network connection to the electronic device, the network device may allocate an IP address to the electronic device, so that the network device may perform data interaction with the electronic device by using the IP address.

It should be understood that step 510 and step 520 are optional steps. In some embodiments, the technical solution may alternatively start from step 530. In other words, the electronic device is already in a network connected state.

530: The electronic device detects a first quantity of junk data packets received within first duration.

In an example, a junk data packet detection apparatus may be disposed in the electronic device. For example, the junk data packet detection apparatus is disposed in a modem in the electronic device, so that a quantity of junk data packets received by the electronic device within a period of time can be detected.

In another example, a function of detecting a quantity of junk data packets may be set in the electronic device. For example, a functional module for detecting the quantity of junk data packets is placed in a modem in the electronic device.

It should be understood that the first duration may be preset. For example, the first duration is 5 minutes. A specific value of the first duration is not limited in embodiments of this application.

540: Determine whether the first quantity is greater than a preset quantity.

In a possible implementation, if the first quantity is greater than the preset quantity, it indicates that the electronic device receives a large quantity of junk data packets within the first duration, and step 550 may be performed.

In another possible implementation, if the first quantity is less than or equal to the preset quantity, it indicates that the electronic device receives a small quantity of junk data packets within the first duration, and the electronic device continues to detect a quantity of junk data packets received within next first duration.

It should be understood that the preset quantity may be 10, 20, or the like. A specific value of the preset quantity is not limited in embodiments of this application.

In some other embodiments, the electronic device may also determine, by determining a relationship between a preset value and a ratio of the first quantity to a total quantity of data packets received by the electronic device within the first duration, whether to send a first network connection request to the network device.

For example, when the ratio of the first quantity to the total quantity of data packets received by the electronic device within the first duration is greater than the preset value, it means that the quantity of junk data packets received by the electronic device within the first duration accounts for a large proportion, and step 550 may be performed.

In another embodiment, whether to resend the first network connection request to the network device may be further determined based on another indicator of the junk data packet, for example, a speed of receiving the junk data packet.

550: The electronic device sends the first network connection request to the network device.

When it is determined that the first quantity is greater than the preset quantity, the electronic device sends the first network connection request to the network device. The first network connection request is used to request to re-establish a network connection to the network device.

For example, when it is determined that the first quantity is greater than the preset quantity, the modem in the electronic device is triggered to re-register with the network. When the modem re-registers with the network, the electronic device is triggered to send the first network connection request to the network device.

It should be understood that in step 550, before the electronic device sends the first network connection request to the network device, the electronic device disconnects the previous network connection to the network device.

560: The electronic device re-establishes a network connection to the network device.

After receiving the first network connection request, the network device may send a paging message to the electronic device. After receiving the paging message, the electronic device may re-establish the network connection to the network device.

When the electronic device re-establishes the network connection to the network device, the network device re-allocates an IP address to the electronic device, so that the network device may perform data interaction with the electronic device by using the newly allocated IP address. Therefore, when the network device continues to send a junk data packet to the original IP address, the electronic device cannot receive the junk data packet. This can reduce power consumption of the electronic device.

In an embodiment of this application, after establishing the network connection to the network device, the electronic device may detect a quantity of junk data packets received within a period of time. When the quantity of junk data packets is greater than a preset quantity, the electronic device may re-send a network connection request to the network device, and re-establish a network connection to the network, so that the network device may allocate a new IP address to the electronic device. Therefore, when the network device continues to send a junk data packet to the original IP address, the electronic device cannot receive the junk data packet. This can reduce power consumption of the electronic device.

It should be understood that after the new IP address is allocated to the electronic device, although the electronic device cannot receive the junk data packet sent by the network device to the original IP address, the electronic device may still receive some junk data packets at the new IP address. In this case, the electronic device may continue to detect a quantity of junk data packets received at the new IP address within specific duration, and may continue the process from step 530 to step 560.

With reference to FIG. 5, the foregoing describes a technical solution in which a terminal device obtains a new IP address by re-establishing a connection to a network device after the network device establishes a network connection to the terminal device and when the terminal device receives a large quantity of junk packets within preset duration, so that a quantity of junk data packets received by the terminal device can be reduced, and power consumption of the terminal device can be reduced.

With reference to FIG. 6, the following describes a technical solution in which a terminal device does not establish a network connection to a network device, to reduce power consumption of the terminal device in embodiments of this application.

FIG. 6 is a schematic flowchart of another power consumption reduction method according to an embodiment of this application. As shown in FIG. 6, the method may include step 610 to step 670.

610: An electronic device sends a third network connection request to a network device.

The third network connection request is used to request to connect the electronic device to a network.

620: The electronic device receives a paging message sent by the network device.

After receiving the third network connection request, the network device sends the paging message to the electronic device.

For example, the paging message may be a packet switching (packet switching, PS) paging message, the paging message may be a circuit switching (circuit switching, CS) paging message, or the paging message may be a paging message in 5G. This is not limited in embodiments of this application.

630: The electronic device parses the paging message.

The electronic device may parse the received paging message to identify a type of the paging message.

For example, the electronic device parses the paging message, and learns that the type of the paging message is a PS paging message. In this case, it means that when the electronic device establishes a network connection to the network device, the network connection is a 4G communication network connection.

For example, the electronic device parses the paging message, and learns that the type of the paging message is a PC paging message. In this case, it means that when the electronic device establishes a network connection to the network device, the network connection is a 2G/3G communication network connection.

640: The electronic device determines whether the paging message is a preset paging message.

When the electronic device determines that the paging message is the preset paging message, step 650 may be performed; or when the electronic device determines that the paging message is not the preset paging message, step 670 may be performed.

In an example, the preset paging message is a PS paging message.

In another example, the preset paging message is a CS paging message.

In another example, the preset paging message is a paging message in a 5G communication network.

650: The electronic device determines whether the electronic device is in a preset state.

When the electronic device determines that the electronic device is in the preset state, step 660 may be performed; or when the electronic device determines that the electronic device is not in the preset state, step 670 may be performed.

For example, the preset state may be a data service switch off state, a voice over long term evolution (voice over long term evolution, VOLTE) switch off state, a do-not-disturb switch on state, or an enterprise Wi-Fi connected state.

It should be understood that, that the electronic device is in the enterprise Wi-Fi connected state means that the electronic device is in a Wi-Fi connected state, but the electronic device can access only a fixed application program, a fixed website, and the like by using the Wi-Fi, that is, the electronic device can access only a part of a network.

660: The electronic device ignores the paging message.

In step 660, after the electronic device determines that the electronic device is in the preset state, the electronic device may ignore the paging message, that is, the electronic device does not establish a network connection to the network device, so that the electronic device may not receive a junk data packet sent by the network device. This reduces power consumption of the electronic device.

670: The electronic device establishes a network connection to the network device.

The electronic device may establish a 3G communication network connection, a 4G communication network connection, a 5G communication network connection, or the like to the network device. This is not limited in embodiments of this application.

In a possible implementation, when the preset paging message is a PS paging message, and the electronic device determines that the received paging message is not a PS paging message, the electronic device may establish a 4G communication network connection to the network device.

In another possible implementation, when the preset paging message is a paging message in 5G, and the electronic device determines that the received paging message is not a paging message in 5G, the electronic device may establish a 5G communication network connection to the network device.

In an embodiment of this application, before the electronic device establishes the network connection to the network device, the electronic device may parse the received paging message, and determine whether the paging message is a preset paging message. When the paging message is the preset paging message, it is determined whether the electronic device is in a preset state. When the electronic device is in the preset state, the received paging message may be ignored, that is, the electronic device does not establish the network connection to the network device. This reduces power consumption of the electronic device.

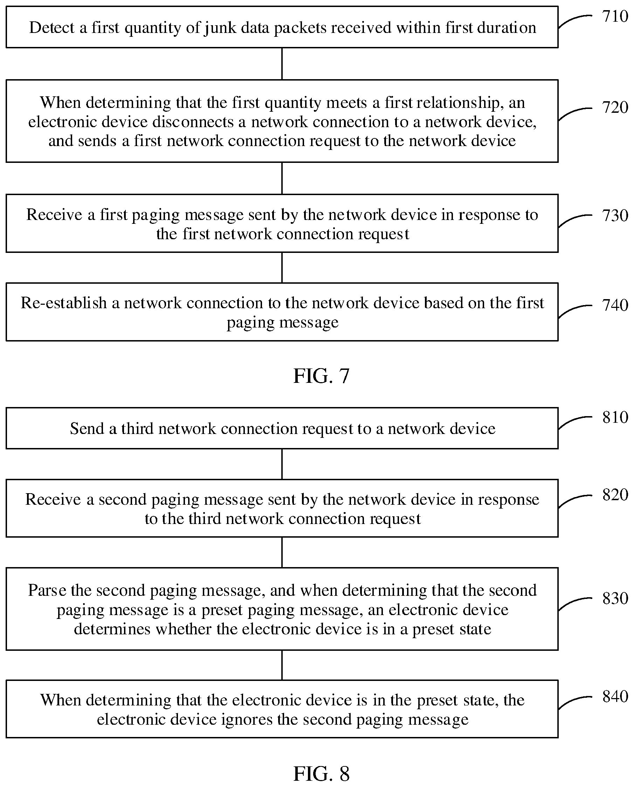

FIG. 7 is a schematic flowchart of a power consumption reduction method according to an embodiment of this application. The method may be applied to an electronic device. As shown in FIG. 7, the method may include step 710 to step 740.

710: The electronic device detects a first quantity of junk data packets received within first duration.

It should be understood that the first duration may be preset duration. For example, the first duration is 5 minutes, 10 minutes, or the like. A specific value of the first duration is not limited in this application.

720: When determining that the first quantity meets a first relationship, the electronic device disconnects a network connection to a network device, and sends a first network connection request to the network device.

When determining that the first quantity meets the first relationship, the electronic device may trigger a re-registration operation, that is, may disconnect the network connection to the network device, and send the first network connection request to the network device.

It should be understood that before and after the re-registration, the electronic device may be connected to different network devices, or may be connected to a same network device. This is not limited in embodiments of this application.

In a possible implementation, that the electronic device determines that the first quantity meets a first relationship includes:
when the first quantity is greater than a first preset value, the electronic device determines that the first quantity meets the first relationship.

When the first quantity is greater than the first preset value, it means that the electronic device receives a large quantity of junk data packets within the first duration. In this case, it may be determined that the first quantity meets the first relationship, so that the electronic device may perform re-registration to reduce power consumption.

It should be understood that a specific value of the first preset value is not limited in embodiments of this application. For example, the first preset value may be 20, 30, or the like.

In another possible implementation, that the electronic device determines that the first quantity meets a first relationship includes:
when a ratio of the first quantity to a total quantity of data packets received by the electronic device within the first duration is greater than a second preset value, the electronic device determines that the first quantity meets the first relationship.

When the ratio of the first quantity to the total quantity of data packets received by the electronic device within the first duration is greater than the second preset value, it means that the electronic device receives a large quantity of junk data packets within the first duration, so that the electronic device may perform re-registration to reduce power consumption.

It should be understood that a specific value of the second preset value is not limited in embodiments of this application. For example, the second preset value may be 0.5, 0.4, or the like.

Optionally, in some other embodiments, whether to perform the re-registration may also be determined by determining a relationship between a first speed at which the electronic device receives the junk data packet within the first duration and a preset speed. For example, when the first speed is greater than the preset speed, the electronic device disconnects the connection to the network device, and sends the network connection request to the network device.

It should be understood that in embodiments of this application, whether to perform the re-registration operation may be further determined in another manner. This is not limited in embodiments of this application.

730: The electronic device receives a first paging message sent by the network device in response to the first network connection request.

It should be understood that after the electronic device sends the first network connection request to the network device, the network device sends the first paging message based on the first network connection request.

740: The electronic device re-establishes a network connection to the network device based on the first paging message.

The electronic device may re-establish the network connection to the network device based on the first paging message.

In an embodiment of this application, the electronic device may detect a quantity of junk data packets received within the first duration. When the quantity meets the first relationship, the electronic device may disconnect the connection to the network device, send a network connection request to the network device, and re-establish a network connection to the network device based on a paging message sent by the network device.

In this way, when the electronic device re-establishes the network connection to the network device, the network device allocates a new IP address to the electronic device. Therefore, when the network device sends a junk data packet to the original IP address, the electronic device cannot receive the junk data packet. This can reduce power consumption of the electronic device.

Optionally, after the network connection to the network device is re-established, an internet protocol IP address used by the electronic device to communicate with the network device is different from an IP address used by the electronic device to communicate with the network device before re-establishing the network connection to the network device.

In an embodiment of this application, after the electronic device re-establishes the network connection to the network device, the network device allocates a new IP address to the electronic device. Therefore, when the network device continues to send a junk data packet to an old IP address, the electronic device cannot receive the junk data packet. This reduces a quantity of junk data packets received by the electronic device. In other words, this reduces power consumption of the electronic device.

Optionally, when the electronic device determines that the first quantity does not meet the first relationship, the electronic device continues to detect a second quantity of junk data packets received by the electronic device within the first duration.

When determining that the second quantity is greater than the first preset value, the electronic device disconnects the network connection to the network device, and sends a network connection request to the network device.

In this way, when the quantity of junk data packets received within the first duration does not meet the first relationship, the electronic device may continue to detect the second quantity of junk data packets received within next first duration. When the second quantity is greater than the preset value, the electronic device may perform the re-registration, that is, disconnect the network connection to the network device, and send the new network connection request to the network device, to re-establish a network connection to the network device. This helps reduce power consumption of the electronic device.

FIG. 8 is a schematic flowchart of another power consumption reduction method according to an embodiment of this application. The method may be applied to an electronic device. As shown in FIG. 8, the method may include step 810 to step 840.

810: The electronic device sends a third network connection request to a network device.

Before establishing a network connection to the network device, the electronic device sends a network connection request to the network device, to request to access a network.

For example, in response to an operation of turning on a data switch by a user, the electronic device sends the network connection request to the network device. Alternatively, the electronic device is in a power-off state, and in response to a power-on operation by a user, the electronic device sends the network connection request to the network device. Alternatively, if the electronic device is in a state of starting an application, for example, HUAWEI Video, in response to an operation of tapping a video by a user, the electronic device sends the network connection request to the network device.

820: The electronic device receives a second paging message sent by the network device in response to the third network connection request.

After receiving the third network connection request sent by the electronic device, the network device may send the second paging message.

830: The electronic device parses the second paging message, and when determining that the second paging message is a preset paging message, the electronic device determines whether the electronic device is in a preset state.

After receiving the second paging message sent by the network device, the electronic device may first parse the second paging message, and when determining that the second paging message is the preset paging message, continue to determine whether the electronic device is in the preset state.

It should be understood that the preset paging message may be a PS paging message, a PC paging message, a paging message in a 5G/future communication network, or the like.

840: When determining that the electronic device is in the preset state, the electronic device ignores the second paging message.

When determining that the electronic device is in the preset state, the electronic device may ignore the second paging message, that is, does not establish a network connection to the network device.

In this way, before the electronic device establishes a network connection to the network device, the electronic device may parse the received paging message, and when determining that the paging message is the preset paging message, determine whether the electronic device is in the preset state. When the electronic device is in the preset state, the paging message may be ignored, so that the electronic device does not establish the network connection to the network device, and the electronic device cannot receive a junk data packet from the network device. This can reduce power consumption of the electronic device.

Optionally, the preset state may be one of the following states:
a data service switch off state of the electronic device;
a voice over long term evolution VOLTE switch off state of the electronic device;
a do-not-disturb switch on state of the electronic device; and
an enterprise Wi-Fi connected state of the electronic device.

It should be understood that, that the electronic device is in the enterprise Wi-Fi connected state means that the electronic device is in a Wi-Fi connected state, but the electronic device can access only a fixed application program, a fixed website, and the like by using the Wi-Fi, that is, the electronic device can access only a part of a network.

Optionally, the second paging message is a PS paging message.

Optionally, the method further includes: when determining that the second paging message is not the preset paging message, the electronic device establishes a network connection to the network device based on the second paging message.

In an embodiment of this application, when determining that the second paging message is not the preset paging message, the electronic device may establish the network connection to the network device, so that normal communication between the electronic device and the network device can be not affected.

Optionally, the method further includes: when determining that the second paging message is the preset paging message and the electronic device is not in the preset state, the electronic device establishes a network connection to the network device based on the second paging message.

In an embodiment of this application, when the second paging message is the preset paging message, but the electronic device is not in the foregoing preset state, the electronic device may establish the network connection to the network device, so that normal communication between the electronic device and the network device can be not affected.

An embodiment of this application further provides an electronic device, including one or more processors and one or more memories, where the one or more memories store one or more computer programs, the one or more computer programs include instructions, and when the instructions are executed by the one or more processors, the power consumption reduction method in any one of the foregoing possible implementations is performed.

An embodiment of this application further provides an apparatus, including modules or units configured to implement the foregoing functions.

An embodiment of this application further provides a chip. The chip includes a processor and a communication interface, the communication interface is configured to: receive a signal, and transmit the signal to the processor, and the processor processes the signal, so that the power consumption reduction method in any one of the foregoing possible implementations is performed.

It may be understood that to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. In actual implementation, there may be another division manner.

An embodiment further provides a computer-readable storage medium. The computer-readable storage medium stores computer instructions. When the computer instructions are run on a computer, the power consumption reduction method in the foregoing embodiments is performed.

An embodiment further provides a computer program product. When the computer program product is run on a computer, the computer is enabled to perform the foregoing related steps, to implement the power consumption reduction method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the power consumption reduction method in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein again.

A person of ordinary skill in the art may be aware that in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed operation process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially or parts contributing to the conventional technology or some of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power consumption reduction method, wherein the method is applied to an electronic device, and the method comprises:
detecting, by the electronic device, a first quantity of junk data packets received within first duration;
when determining that the first quantity meets a first relationship, disconnecting, by the electronic device, a network connection to a network device, and sending a first network connection request to the network device;
receiving, by the electronic device, a first paging message sent by the network device in response to the first network connection request; and
re-establishing, by the electronic device, a network connection to the network device based on the first paging message.

2. The method according to claim 1, wherein the determining, by the electronic device, that the first quantity meets a first relationship comprises:
when the first quantity is greater than a first preset value, determining, by the electronic device, that the first quantity meets the first relationship.

3. The method according to claim 1, wherein the determining, by the electronic device, that the first quantity meets a first relationship comprises:
when a ratio of the first quantity to a total quantity of data packets received by the electronic device within the first duration is greater than a second preset value, determining, by the electronic device, that the first quantity meets the first relationship.

4. The method according to any one of claims 1 to 3, wherein after the network connection to the network device is re-established, an internet protocol IP address used by the electronic device to communicate with the network device is different from an IP address used by the electronic device to communicate with the network device before re-establishing the network connection to the network device.

5. The method according to any one of claims 1 to 4, wherein the method further comprises:
when the electronic device determines that the first quantity does not meet the first relationship, continuing, by the electronic device, to detect a second quantity of junk data packets received by the electronic device within the first duration; and
when determining that the second quantity is greater than the first preset value, disconnecting, by the electronic device, the network connection to the network device, and sending a network connection request to the network device.

6. A power consumption reduction method, wherein the method is applied to an electronic device, and the method comprises:
sending, by the electronic device, a third network connection request to a network device;
receiving, by the electronic device, a second paging message sent by the network device in response to the third network connection request;
parsing, by the electronic device, the second paging message, and when determining that the second paging message is a preset paging message, determining, by the electronic device, whether the electronic device is in a preset state; and
when determining that the electronic device is in the preset state, ignoring, by the electronic device, the second paging message.

7. The method according to claim 6, wherein the second paging message is a packet switching PS paging message.

8. The method according to claim 6 or 7, wherein the preset state comprises one of the following states:
a data service switch off state of the electronic device;
a voice over long term evolution VOLTE switch off state of the electronic device;
a do-not-disturb switch on state of the electronic device; and
an enterprise Wi-Fi connected state of the electronic device.

9. The method according to any one of claims 6 to 8, wherein the method further comprises:
when determining that the second paging message is not the preset paging message, establishing, by the electronic device, a network connection to the network device based on the second paging message.

10. The method according to any one of claims 6 to 8, wherein the method further comprises:
when determining that the second paging message is the preset paging message and the electronic device is not in the preset state, establishing, by the electronic device, a network connection to the network device based on the second paging message.

11. An electronic device, comprising one or more processors and one or more memories, wherein the one or more memories store one or more computer programs, the one or more computer programs comprise instructions, and when the instructions are executed by the one or more processors, the power consumption reduction method according to any one of claims 1 to 5 is performed.

12. An electronic device, comprising one or more processors and one or more memories, wherein the one or more memories store one or more computer programs, the one or more computer programs comprise instructions, and when the instructions are executed by the one or more processors, the power consumption reduction method according to any one of claims 6 to 10 is performed.

13. A chip, wherein the chip comprises a processor and a communication interface, the communication interface is configured to: receive a signal, and transmit the signal to the processor, and the processor processes the signal, so that the power consumption reduction method according to any one of claims 1 to 5 is performed.

14. A chip, wherein the chip comprises a processor and a communication interface, the communication interface is configured to: receive a signal, and transmit the signal to the processor, and the processor processes the signal, so that the power consumption reduction method according to any one of claims 6 to 10 is performed.

15. A computer-readable storage medium, wherein the computer-readable storage medium stores computer instructions; and when the computer instructions are run on a computer, the power consumption reduction method according to any one of claims 1 to 5 or claims 6 to 10 is performed.
